(19) Europäisches Patentamt
European Patent Office
Office européen des brevets

(11) **EP 4 404 309 A1**

(12) **EUROPEAN PATENT APPLICATION**

(43) Date of publication:
**24.07.2024 Bulletin 2024/30**

(21) Application number: **24152584.9**

(22) Date of filing: **18.01.2024**

(51) International Patent Classification (IPC):
**H01M 4/62** *(2006.01)*   **H01M 10/42** *(2006.01)*
**H01M 4/13** *(2010.01)*   H01M 10/0525 *(2010.01)*
**H01M 4/02** *(2006.01)*

(52) Cooperative Patent Classification (CPC):
**H01M 4/62; H01M 10/4235;** H01M 4/13;
H01M 10/0525; H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.01.2023 JP 2023005616**

(71) Applicant: **Samsung SDI Co., Ltd.**
**Yongin-si, Gyeonggi-do 17084 (KR)**

(72) Inventors:
• **BAEK, Jinseok**
**Yokohama-shi (JP)**
• **INUI, Kunihiro**
**Yokohama-shi (JP)**

(74) Representative: **Marks & Clerk LLP**
**15 Fetter Lane**
**London EC4A 1BW (GB)**

(54) **POSITIVE ELECTRODE FOR NON-AQUEOUS ELECTROLYTE RECHARGEABLE BATTERY AND NON-AQUEOUS ELECTROLYTE RECHARGEABLE BATTERY INCLUDING THE SAME**

(57)    A positive electrode for a non-aqueous electrolyte rechargeable battery is provided that can sufficiently suppress a rise in an internal temperature of the battery to improve safety, while also improving battery performance such as electrical resistance and cycle characteristics. A positive electrode for a non-aqueous electrolyte rechargeable battery includes a positive electrode current collector, a positive electrode mixture layer on the positive electrode current collector, and a flame retardant layer on a surface of the positive electrode mixture layer opposite to the current collector, wherein the flame retardant layer includes composite particles including a metal hydroxide and a flame retardant, an amount of desorbed $P_2$ (MS1) of the composite particles from about 80 °C to about 1400 °C as determined by thermal desorption gas mass spectrometry (TDS-MS) is greater than or equal to about $200 \times 10^{-6}$ mol/g and less than or equal to about $2500 \times 10^{-6}$ mol/g, and an amount of desorbed $H_2O$ (MS2) from about 80 °C to about 200 °C by TDS-MS is greater than or equal to about $50 \times 10^{-6}$ mol/g and less than or equal to about $1000 \times 10^{-6}$ mol/g.

FIG. 2

EP 4 404 309 A1

**Description**

**BACKGROUND OF THE INVENTION**

**(a) Field of the Invention**

This disclosure relates to a positive electrode for a non-aqueous electrolyte rechargeable battery and a non-aqueous electrolyte rechargeable battery including the same.

**(b) Description of the Related Art**

Non-aqueous electrolyte rechargeable batteries including rechargeable lithium ion batteries are widely used as power sources for smart phones, notebook computers, and the like, and recently are also used for large-sized batteries such as those for vehicles.

On the other hand, the rechargeable lithium ion batteries have advantages of high energy density, but since they use non-aqueous electrolytes, sufficient measures are required for safety. However, with the recent increase in the size of batteries, securing safety has become more important.

For example, when a rechargeable lithium ion battery is placed in a high-temperature environment, there is a possibility that the positive electrode of the rechargeable lithium ion battery generates heat, or heat is generated due to an oxidative decomposition reaction of the electrolyte caused by oxygen radicals generated from the positive electrode, causing an increase in the internal temperature of the battery.

If the internal temperature of the battery becomes very high due to such causes, a short circuit due to shrinkage of the separator provided in the rechargeable lithium ion battery is likely to occur, and there is a risk that the internal temperature of the battery will gradually rise.

Therefore, in order to suppress the internal temperature rise of the rechargeable lithium ion battery and ensure stability, a flame retardant layer including a flame retardant such as a cyclic phosphazene compound with radical capture ability is formed on the surface of the positive electrode (Patent Document 1). However, it has been proposed to improve the safety of the battery by forming a porous insulating layer including a flame retardant on the surface of the positive electrode and further controlling the elastic modulus of the porous insulating layer (Patent Document 2).

[Prior Art Documents]

[Patent Documents]

(Patent Document 1) Japanese Patent Publication No. 2013-054969
(Patent Document 2) Japanese Patent Publication No. H11-86844

**SUMMARY OF THE INVENTION**

However, according to the present inventors' examination, as described in Patent Documents 1 and 2, by simply forming a flame retardant layer on the surface of the positive electrode and including a flame retardant having a radical trapping ability in this flame retardant layer, the internal temperature of the battery could not be sufficiently suppressed.

In addition, the present inventor also realized that forming the above-described flame retardant layer on the surface of the electrode may increase resistance of the battery or deteriorate cycle characteristics.

The present invention has been made in consideration of the above-mentioned problems, and provides a positive electrode for a non-aqueous electrolyte rechargeable battery that can sufficiently suppress a rise in the internal temperature of the battery to improve safety and also improve battery performance such as electrical resistance and cycle characteristics.

That is, some embodiments of the present disclosure are as follows.

[1] A positive electrode for a non-aqueous electrolyte rechargeable battery, comprising a positive electrode current collector, a positive electrode mixture layer on the positive electrode current collector, and a flame retardant layer on a surface of the positive electrode mixture layer opposite to the current collector, wherein the flame retardant layer includes composite particles including a metal hydroxide and a flame retardant, an amount of desorbed $P_2$ (MS1) of the composite particles from about 80 °C to about 1400 °C as determined by thermal desorption gas mass spectrometry (TDS-MS) is greater than or equal to about $200 \times 10^{-6}$ mol/g and less than or equal to about $2500 \times 10^{-6}$

mol/g, and an amount of desorbed $H_2O$ (MS2) from about 80 °C to about 200 °C by TDS-MS is greater than or equal to about $50 \times 10^{-6}$ mol/g and less than or equal to about $1000 \times 10^{-6}$ mol/g.

[2] The positive electrode described in [1], wherein a ratio of the amounts of desorbed gases of the composite particles satisfies Formula (1):

$$0.5 \leq (MS1/MS2) \leq 10.0 \qquad (1).$$

[3] The positive electrode described in [1] or [2], wherein an integrated value of 50% ($D_{50}$) of a volume-based particle size distribution of the composite particles is greater than or equal to about 0.05 $\mu$m and less than or equal to about 3 $\mu$m, and/or an integrated value of 90% ($D_{90}$) of a volume-based particle size distribution of the composite particles is less than or equal to about 5 $\mu$m.

[4] The positive electrode described in any one of [1] to [3], wherein a specific surface area (BET) of the composite particles calculated by an adsorption isotherm measured by adsorbing nitrogen to the composite particles is greater than or equal to about 8 $m^2/g$ and less than or equal to about 150 $m^2/g$.

[5] The positive electrode described in any one of [1] to [4], wherein the metal hydroxide is at least one selected from aluminium hydroxide, pseudo-boehmite, boehmite, alumina, and kaolinite, and/or a surface and interior of the metal hydroxide are modified with the flame retardant.

[6] The positive electrode described in any one of [1] to [5], wherein the flame retardant includes at least one of a phosphoric acid, a phosphoric acid ester, a phosphonic acid, or a phosphinic acid.

[7] The positive electrode described in any one of [1] to [6], wherein a content of an aluminium element (e.g. of the composite particles) is about 5 mass% to 30 mass% and/or a content of a phosphorus element (e.g. of the composite particles) is about 5 mass% to about 30 mass% as determined by inductively coupled plasma emission spectroscopy (ICP-AES).

[8] The positive electrode described in any one of [1] to [7], wherein the flame retardant layer includes the composite particles and a binder, a content of the composite particles in the flame retardant layer is about 70 mass% to about 99 mass%, and a content of the binder in the flame retardant layer is about 1 mass% to about 30 mass%.

[9] The positive electrode described in any one of [1] to [8], wherein the flame retardant layer has a thickness of about 0.1 $\mu$m to about 5 $\mu$m.

[10] A non-aqueous electrolyte rechargeable battery comprising a positive electrode, a negative electrode, a separator, and a non-aqueous electrolyte solution, wherein the positive electrode is a positive electrode for the non-aqueous electrolyte rechargeable battery described in any one of [1] to [9].

At least some of the above and other features of the invention are set out in the claims.

According to the present invention, a flame retardant layer including composite particles formed by mixing a metal hydroxide and a flame retardant in an appropriate ratio is formed on the surface of the positive electrode. Therefore, when the temperature inside the battery begins to rise, an endothermic reaction occurs in the composite particles. This causes radical capture by the flame retardant and suppresses an electrolyte decomposition reaction, thereby sufficiently suppressing the increase in internal temperature in the non-aqueous electrolyte rechargeable battery. According to the present invention, it is possible to improve battery performance such as cell resistance and cycle characteristics compared to the case where the flame retardant layer including composite particles is not provided.

## BRIEF DESCRIPTION OF THE DRAWINGS

FIG. 1 is a schematic view showing the overall structure of a non-aqueous electrolyte rechargeable battery according to some embodiments.

FIG. 2 is a schematic view showing the structure of the positive electrode of the non-aqueous electrolyte rechargeable battery according to some embodiments.

FIG. 3 is a schematic view showing the structure of composite particles for a non-aqueous electrolyte rechargeable battery according to some embodiments.

FIG. 4 is a graph showing discharge capacity retention rates of Example 2 and Comparative Example 1.

FIG. 5 is a graph showing cell resistances of Example 2 and Comparative Example 1.

FIG. 6 is a graph showing exothermic behavior of Example 2 and Comparative Example 1.

## DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or length of the long axis) of about 20 particles at random in a scanning electron microscope image. $D_{90}$ (particles having a cumulative volume of 90 volume% in the particle size distribution) may be measured using the same methods as $D_{50}$. Also, depending on context, when particles are spherical, "diameter" indicates a particle diameter or an average particle diameter, and when the particles are non-spherical, the "diameter" indicates a major axis length or an average major axis length.

Herein, "or" is not to be construed as an exclusive meaning, for example, "A or B" is construed to include A, B, A+B, and the like.

"Metal" is interpreted as including ordinary metals, transition metals and metalloids (semi-metals).

Hereinafter, a specific configuration of a non-aqueous electrolyte rechargeable battery according to an embodiment will be described.

<1. Basic Configuration of Non-aqueous Electrolyte Rechargeable Battery >

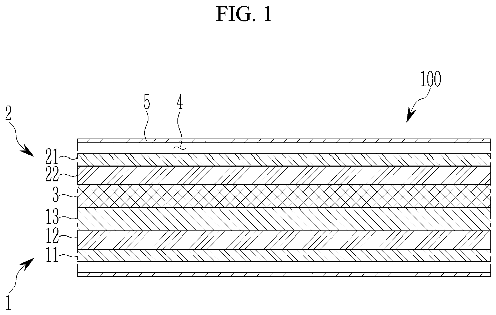

As shown in FIG. 1, the non-aqueous electrolyte rechargeable battery 100 according to some embodiments is a rechargeable lithium ion battery including a positive electrode 1, a negative electrode 2, a separator 3, a non-aqueous electrolyte 4, and a case 5 configured to accommodate the positive electrode 1, the negative electrode 2, the separator 3, and the non-aqueous electrolyte 4 therein.

The shape of the rechargeable lithium ion battery is not particularly limited, but may be, for example, a cylindrical shape, a prismatic shape, a laminated shape, or a button shape.

(1-1. Positive Electrode)

The positive electrode 1 includes a positive electrode current collector 11 and a positive electrode mixture layer 12 on the positive electrode current collector 11.

The positive electrode current collector 11 may be any material as long as the material is a conductor, and is, for example, plate-shaped or thin, and may be desirably made of aluminium, stainless steel, nickel coated steel, or the like.

The positive electrode mixture layer 12 may include at least a positive electrode active material, and may further include a conductive agent and a positive electrode binder.

The positive electrode active material may be, for example, a transition metal oxide or a solid solution oxide including lithium, and is not particularly limited as long as the material can electrochemically intercalate and deintercalate lithium ions. Examples of the transition metal oxide including lithium may include $Li_{1.0}Ni_{0.88}Co_{0.1}Al_{0.01}Mg_{0.01}O_2$, etc. In

addition, the transition metal oxide including lithium may include Li·Co composite oxides such as $LiCoO_2$ and Li·Ni·Co-Mn-based composite oxides such as $LiNi_xCo_yMn_zO_2$, Li-Ni-based composite oxides such as $LiNiO_2$, or Li-Mn-based composite oxides such as $LiMn_2O_4$, and the like. Examples of the solid solution oxide may include $Li_aMn_xCo_yNi_zO_2$ ($1.150 \leq a \leq 1.430$, $0.45 \leq x \leq 0.6$, $0.10 \leq y \leq 0.15$, $0.20 \leq z \leq 0.28$), $LiMn_{1.5}Ni_{0.5}O_4$. On the other hand, a content (content ratio) of the positive electrode active material is not particularly limited, as long as the content is applicable to the positive electrode mixture layer 12 of a non-aqueous electrolyte rechargeable battery 100. Moreover, these compounds may be used alone or may be used as a mixture of two or more types.

The conductive agent is not particularly limited as long as the conductive agent can be used for increasing the conductivity of the positive electrode 1. Specific examples of the conductive agent may include those including at least one selected from among carbon black, natural graphite, artificial graphite, fibrous carbon, and sheet-like carbon.

Examples of the carbon black may include furnace black, channel black, thermal black, ketjen black, and acetylene black. Examples of the fibrous carbon may include carbon nanotubes and carbon nanofibers, and examples of the sheet-like carbon include graphene and the like.

A content of the conductive agent in the positive electrode mixture layer 12 is not particularly limited, but may be greater than or equal to about 0.1 mass% and less than or equal to about 5 mass%, greater than or equal to about 0.5 mass% and less than or equal to about 3 mass% based on the total amount of the positive electrode mixture layer 12, from the viewpoint of achieving both conductivity and battery capacity.

The positive electrode binder may include, for example, a fluoro-containing resin such as polyvinylidene fluoride, an ethylene-containing resin such as styrene-butadiene rubber, an ethylene-propylene diene terpolymer, an acrylonitrile-butadiene rubber, a fluoro rubber, polyvinyl acetate, polymethylmethacrylate, polyethylene, polyvinyl alcohol, carboxymethyl cellulose, a carboxymethyl cellulose derivative (a salt of carboxymethyl cellulose, etc.), nitrocellulose, and the like. The positive electrode binder may be any material capable of binding the positive electrode active material and the conductive agent onto the positive electrode current collector 11, and is not particularly limited.

(1-2. Negative Electrode)

The negative electrode 2 includes a negative current collector 21 and a negative electrode mixture layer 22 on the negative current collector 21.

The negative current collector 21 may be made of anything as long as the negative current collector 21 is a conductor, and may be desirably plate-shaped or thin, and made of copper, stainless steel, nickel-plated steel, or the like.

The negative electrode mixture layer 22 may include a negative electrode active material, and may further include a conductive agent and a negative electrode binder.

The negative electrode active material is not particularly limited as long as the negative electrode active material can electrochemically intercalate and deintercalate lithium ions, but, may be, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or a mixture of oxides thereof and a graphite active material, particulates of silicon or tin, an alloy including silicon or tin as a base material), metallic lithium, and a titanium oxide compound such as $Li_4Ti_5O_{12}$, lithium nitride, and the like. As the negative electrode active material, one of the above examples may be used, or two or more types may be used in combination. On the other hand, oxides of silicon may be represented by $SiO_x$ ($0 \leq x \leq 2$).

The conductive agent is not particularly limited as long as the conductive agent can be used for increasing the conductivity of the negative electrode 2, and for example, the same conductive agent as described in the section for the positive electrode 1 may be used.

A content of the conductive agent in the negative electrode mixture layer 22 is not particularly limited, but may be greater than or equal to about 0.1 mass% and less than or equal to about 5 mass%, or greater than or equal to about 0.5 mass% and less than or equal to about 3 mass% based on the total weight of the negative electrode mixture layer 22, from the viewpoint of achieving both conductivity and battery capacity.

The negative electrode binder may be one capable of binding the negative electrode active material and the conductive agent on the negative current collector 21, and is not particularly limited. The negative electrode binder may be, for example, polyvinylidene fluoride (PVDF), polytetrafluoroethylene (PTFE), polyacrylic acid (PAA), a styrene-butadiene-based copolymer (SBR), a metal salt of carboxymethyl cellulose (CMC), etc. The binder may be used alone or may be used in mixture of two or more types.

(1-3. Separator)

The separator is not particularly limited, and any separator may be used as long as the separator can be used as a separator for a rechargeable lithium ion battery. The separator may be a porous film, nonwoven fabric, or the like that exhibits excellent high-rate discharge performance alone or in combination. The resin constituting the separator may be, for example, a polyolefin-based resin such as polyethylene, polypropylene, etc., a polyester resin such as polyethylene terephthalate, polybutylene terephthalate, etc., polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoro propylene copolymer, a vinylidene difluoride-tetrafluoroethylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

The separator may further include a surface layer covering the surface of the porous film or non-woven fabric described above. The surface layer may include an adhesive for immobilizing the battery element by adhering to the electrode. Examples of the adhesive may include a vinylidene fluoride-hexafluoropropylene copolymer, an acid-modified product of vinylidene fluoride polymers, and a styrene-(meth)acrylic acid ester copolymer.

(1-4. Non-aqueous Electrolyte)

As the non-aqueous electrolyte, non-aqueous electrolytes that are conventionally used for rechargeable lithium ion batteries may be used without particular limitation. The non-aqueous electrolyte has a composition in which an electrolyte salt is included in a non-aqueous solvent, which is a solvent for the electrolyte. Examples of the non-aqueous solvent may include cyclic carbonate esters such as propylene carbonate, ethylene carbonate, butylene carbonate, chloroethylene carbonate, fluoroethylene carbonate, and vinylene carbonate, cyclic esters such as $\gamma$-butyrolactone and $\gamma$-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, or methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including one of lithium (Li), sodium (Na) or potassium (K) such as $LiClO_4$, $LiBF_4$, $LiAsF_6$, $LiPF_6$, $LiPF_{6-x}(C_nF_{2n+1})_x$ [provided that 1<x<6, n=1 or 2], LiSCN, LiBr, LiI, $Li_2SO_4$, $Li_2B_{10}Cl_{10}$, $NaClO_4$, NaI, NaSCN, NaBr, $KClO_4$, KSCN, KI, KBr, or an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, lithium stearyl sulfonate, lithium octyl sulfonate, lithium dodecylbenzene sulfonate, and the like, and it is also possible to use these ionic compounds alone or in a mixture of two or more types. Meanwhile, a concentration of the electrolyte salt may be the same as that of a non-aqueous electrolyte used in a conventional rechargeable lithium ion battery, and is not particularly limited. In an embodiment, it is desirable to use a non-aqueous electrolyte including the above-described lithium compound (electrolyte salt) at a concentration of greater than or equal to about 0.8 mol/L and less than or equal to about 1.5 mol/L.

Meanwhile, various additives may be added to the non-aqueous electrolyte. Examples of such additives may include negative electrode-acting action additives, positive electrode-acting additives, ester additives, carbonate ester additives, sulfuric acid ester additives, phosphoric acid ester additives, boric acid ester additives, acid anhydride additives, and electrolyte additives. One of these may be added to the non-aqueous electrolyte, and a plurality of types of additives may be added.

<2. Characteristic Configuration of Non-aqueous Electrolyte Rechargeable Battery According to The Present Embodiment >

Hereinafter, the characteristic configuration of the non-aqueous electrolyte rechargeable battery 100 according to an embodiment will be described.

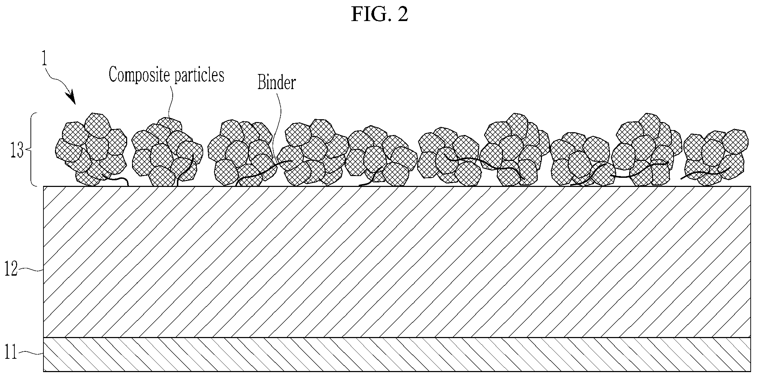

As shown in FIGS. 1 and 2, the positive electrode 1 of the non-aqueous electrolyte rechargeable battery 100 according to the present embodiment includes a flame retardant layer 13 on the surface opposite to the positive electrode current collector 11 of the positive electrode mixture layer 12.

The flame retardant layer 13 is composed of composite particles for a non-aqueous electrolyte rechargeable battery (also simply referred to as composite particles) that function as a heat suppressing additive to suppress the internal temperature rise of the non-aqueous electrolyte rechargeable battery 100, and a binder for binding the composite particles in the flame retardant layer to each other and the flame retardant layer 13 and the positive electrode mixture layer 12. The material in the flame retardant layer 13 may be different to the material in the positive electrode mixture layer 12.

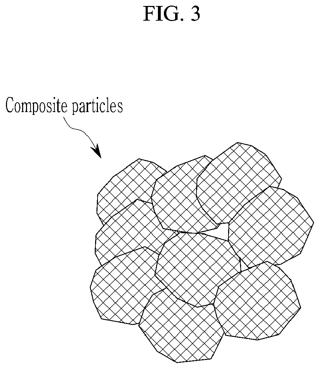

The composite particles are composite particles in which a metal hydroxide capable of absorbing heat through an endothermic reaction and a flame retardant having a radical trapping ability are combined. As shown in FIG. 3, these composite particles are combined after the metal hydroxide particles and the flame retardant are mixed as uniformly as possible. More specifically, a plurality of metal hydroxide particles including the flame retardant on the surface and inside are gathered together. Herein, the composite means, for example, a state in which a plurality of particles are formed into one aggregate by chemically bonding to each other through the functional groups (for example, hydroxyl and phosphate groups) possessed by each particle. For example, the metal hydroxide may be chemically bonded to the flame retardant in the composite particles. The chemical bond herein includes not only covalent bonds but also various bonds such as ionic bonds, coordination bonds, and metallic bonds. For example, the metal hydroxide may be covalently bonded to the flame retardant in the composite particles (e.g. via a phosphoester bond). The bonding state between particles can be confirmed by, for example, X-ray photoelectron spectroscopy.

The particle diameter of the composite particles is desirably such that the integrated value of 50% ($D_{50}$) of the volume-based particle size distribution may be greater than or equal to about 0.05 $\mu$m and less than or equal to about 3 $\mu$m. The $D_{50}$ of the composite particle may be greater than or equal to about 0.1 $\mu$m and less than or equal to about 2 $\mu$m, for example, greater than or equal to about 0.4 $\mu$m and less than or equal to about 1.5 $\mu$m, greater than or equal to about 0.5 $\mu$m and less than or equal to about 1.5 $\mu$m, greater than or equal to about 0.4 $\mu$m and less than or equal to about 1.3 $\mu$m, or greater than or equal to about 0.5 $\mu$m and less than or equal to about 1.3 $\mu$m.

Additionally, an integrated value of 90% ($D_{90}$) of the particle size distribution based on the volume of the composite particles may be greater than or equal to about 0.05 $\mu$m and less than or equal to about 5 $\mu$m. The $D_{90}$ of the composite particle may be less than or equal to about 4.5 $\mu$m, for example, greater than or equal to about 0.5 $\mu$m and less than or equal to about 4.5 $\mu$m, greater than or equal to about 1 $\mu$m and less than or equal to about 4.5 $\mu$m, greater than or equal to about 1.5 $\mu$m and less than or equal to about 4.5 $\mu$m, greater than or equal to about 2.0 $\mu$m and less than or equal to about 4.5 $\mu$m, greater than or equal to about 2.5 $\mu$m and less than or equal to about 4.5 $\mu$m, or greater than or equal to about 2.6 $\mu$m and less than or equal to about 4.5 $\mu$m. The particle size of the composite particles can be controlled by the preparing conditions of the composite particles. For example, if the temperature for preparing composite particles is increased or the stirring speed is increased, the particle size of the composite particles tends to become smaller. For example, it is possible to make the particle size of the composite particles smaller than the particle size of the metal hydroxide that is the starting material.

Because the thickness of the flame retardant layer is desirably small as will be described later, it is desirable that the particle size of the composite particles be as small as possible in order to make the thickness of the small flame retardant layer as uniform as possible.

The metal hydroxide particles may be any endothermic material capable of causing an endothermic reaction and are not particularly limited. Specific examples of the metal hydroxides include aluminium hydroxide, pseudo-boehmite, boehmite, alumina, and kaolinite. Metal hydroxides as used herein may include metal oxides, which are mainly composed of metal oxide material but include hydroxyl groups on a surface thereof. These may be used individually, or two or more types may be used together.

The integrated value of 50% ($D_{50}$) of the volume-based particle size distribution of the metal hydroxide particles may be greater than or equal to about 10 nm and less than or equal to about 10 $\mu$m, more desirably greater than or equal to about 50 nm and less than or equal to about 5 $\mu$m, and even more desirably greater than or equal to about 0.1 $\mu$m and less than or equal to about 3 $\mu$m (e.g. greater than or equal to about 0.5 $\mu$m and less than or equal to about 2 $\mu$m, or greater than or equal to about 1 $\mu$m and less than or equal to about 1.5 $\mu$m).

The flame retardant may be any that has a radical trapping ability to capture radicals such as oxygen radicals generated in the positive electrode mixture layer 12, and may include, for example, at least one type selected from a phosphoric acid (e.g. $H_3PO_4$), a phosphoric acid ester (e.g. diphenyl phosphate, phenyl phosphate), a phosphonic acid (e.g. methylphosphonic acid, phenylphosphonic acid), and a phosphinic acid (e.g. methylphosphinic acid), which can form a functional group including a phosphorus (P) element by combining with the metal hydroxide (e.g. by forming a covalent bond with the metal hydroxide, such as a phosphoester bond).

A content of the metal hydroxide particles in the composite particles may be in the range of greater than or equal to about 1 mass% and less than or equal to about 60 mass%, greater than or equal to about 5 mass% and less than or equal to about 50 mass%, or greater than or equal to about 10 mass% and less than or equal to about 40 mass% based on the total weight of the composite particles (100 mass%). For example, a content of the metal hydroxide particles in the composite particles may be in the range of greater than or equal to about 1 mass% and less than or equal to about 50 mass%, greater than or equal to about 5 mass% and less than or equal to about 30 mass%, or greater than or equal to about 10 mass% and less than or equal to about 20 mass% based on the total weight of the composite particles (100 mass%).

A content of the flame retardant in the composite particles may be in the range of greater than or equal to about 0.1 mass% and less than or equal to about 90 mass%, greater than or equal to about 1 mass% and less than or equal to about 85 mass%, or greater than or equal to about 10 mass% and less than or equal to about 80 mass% based on a total weight of the composite particles (100 mass%). For example, a content of the flame retardant in the composite particles may be in the range of greater than or equal to about 0.1 mass% and less than or equal to about 25 mass%, greater than or equal to about 0.5 mass% and less than or equal to about 20 mass%, or greater than or equal to about 1 mass% and less than or equal to about 15 mass% based on a total weight of the composite particles (100 mass%).

A content of composite particles in the flame retardant layer 13 may be in the range of greater than or equal to about 50 mass% and less than or equal to about 99 mass%, greater than or equal to about 65 mass% and less than or equal to about 99 mass%, greater than or equal to about 80 mass% and less than or equal to about 99 mass%, or greater than or equal to about 80 mass% and less than or equal to about 98 mass% based on a total weight of the flame retardant layer 13 (100 mass%). Within this range, sufficient heat suppression effect and good battery performance can be achieved.

As the binder, for example, those listed as binders for positive electrodes can be used.

A content of the binder in the flame retardant layer 13 may be in the range of greater than or equal to about 1 mass% and less than or equal to about 50 mass%, greater than or equal to about 1 mass% and less than or equal to about 35 mass%, for example greater than or equal to about 1 mass% and less than or equal to about 20 mass%, or greater than or equal to about 2 mass% and less than or equal to about 20 mass% based on a total weight of the flame retardant layer 13 (100 mass%) from the viewpoint of sufficiently suppressing the rise in internal temperature while demonstrating sufficient binding force.

A thickness of the flame retardant layer 13 may be greater than or equal to about 0.1 $\mu$m and less than or equal to about 5 $\mu$m. By setting the thickness of the flame retardant layer 13 to greater than or equal to about 0.1 $\mu$m, the flame retardant layer 13 can be made to have a sufficient heat suppression effect. Additionally, by setting the thickness of the flame retardant layer 13 to less than or equal to about 5 $\mu$m, an increase in electrical resistance and a decrease in the energy density of the battery due to the provision of the flame retardant layer 13 may be suppressed. The thickness of the flame retardant layer 13 may be greater than or equal to about 0.5 $\mu$m and less than or equal to about 5 $\mu$m, or greater than or equal to about 1 $\mu$m and less than or equal to about 4 $\mu$m.

Meanwhile, the content of the composite particles for non-aqueous electrolyte rechargeable battery based on a total non-aqueous electrolyte rechargeable battery 100 varies depending on the use of the non-aqueous electrolyte rechargeable battery 100 and is not limited to the range below, but for example, when the overall mass of the rechargeable battery 100 is 100 mass%, the content of composite particles for non-aqueous electrolyte rechargeable batteries included in the non-aqueous electrolyte rechargeable battery 100 may be greater than or equal to about 0.01 mass% and less than or equal to about 5.0 mass%, greater than or equal to about 0.02 mass% and less than or equal to about 2.0 mass%, or greater than or equal to about 0.1 mass% and less than or equal to about 0.5 mass%.

<3. Manufacturing Method of Non-aqueous Electrolyte Rechargeable Battery According to an Embodiment >

Hereinafter, the manufacturing method of the non-aqueous electrolyte rechargeable battery 100 according to the present embodiment is described.

(3-1. Preparing Method of Composite Particles)

The composite particles for a non-aqueous electrolyte rechargeable battery according to the present embodiment can be prepared by mixing metal hydroxide particles and a flame retardant and heating the metal hydroxide particles and the flame retardant.

The mixing may be performed, for example, by dispersing the metal hydroxide particles and the flame retardant in an appropriate solvent and stirring the metal hydroxide particles and the flame retardant. Herein, the stirring speed may be greater than or equal to about 50 m/min and less than or equal to about 1000 m/min, or for example greater than or equal to about 200 m/min and less than or equal to about 800 m/min.

The composite particles can be obtained by heating the dispersion to a temperature of, for example, greater than or equal to about 40 °C and less than or equal to about 100 °C, reacting at this temperature for greater than or equal to about 1 hour and less than or equal to about 48 hours, and then filtering the product (e.g. with filter paper).

The solvent may be water, or a mixture of water and an alcohol-based organic solvent such as ethanol or 2-propanol.

The heating temperature may be greater than or equal to about 60 °C and less than or equal to about 80 °C, and/or the heating time (reaction time) may be greater than or equal to about 5 hours and less than or equal to about 30 hours.

The fact that the particles produced as described above have become the target composite particles may be confirmed, for example, by an amount of various degassing due to various modifying groups being in the following range.

In addition, when the composite particles are heated from about 80 °C to about 1400 °C, the amount of $P_2$ gas

desorbed from the composite particles measured by TDS-MS (referred to as MS1) may be greater than or equal to about $200 \times 10^{-6}$ mol/g and less than or equal to about $2500 \times 10^{-6}$ mol/g and the amount of desorbed $H_2O$ (referred to as MS2) may be greater than or equal to about $50 \times 10^{-6}$ mol/g and less than or equal to about $1000 \times 10^{-6}$ mol/g.

MS1 may be greater than or equal to about $300 \times 10^{-6}$ mol/g and less than or equal to about $2000 \times 10^{-6}$ mol/g, greater than or equal to about $400 \times 10^{-6}$ mol/g and less than or equal to about $1800 \times 10^{-6}$ mol/g, or greater than or equal to about $500 \times 10^{-6}$ mol/g and less than or equal to about $1700 \times 10^{-6}$ mol/g.

MS2 may be greater than or equal to about $100 \times 10^{-6}$ mol/g and less than or equal to about $950 \times 10^{-6}$ mol/g, greater than or equal to about $300 \times 10^{-6}$ mol/g and less than or equal to about $900 \times 10^{-6}$ mol/g, or greater than or equal to about $500 \times 10^{-6}$ mol/g and less than or equal to about $900 \times 10^{-6}$ mol/g.

Moreover, a ratio (MS1/MS2) of the amounts of these desorbed gases may be greater than or equal to about 0.5 and less than or equal to about 10.0, greater than or equal to about 0.5 and less than or equal to about 5.0, greater than or equal to about 0.8 and less than or equal to about 3.0, greater than or equal to about 0.8 and less than or equal to about 2.5, or greater than or equal to about 0.8 and less than or equal to about 2.2. When the ratio (MS1/MS2) of the amounts of desorbed gases satisfies this range, both the temperature increase suppressing effect by increasing the modification by the flame retardant and the battery performance may be exhibited in a better balance.

In addition, a specific surface area of the composite particles calculated by the adsorption isotherm measured by adsorbing nitrogen to the composite particles may be greater than or equal to about 8 $m^2/g$ and less than or equal to about 150 $m^2/g$, greater than or equal to about 10 $m^2/g$ and less than or equal to about 120 $m^2/g$, or greater than or equal to about 35 $m^2/g$ and less than or equal to about 100 $m^2/g$.

In order to prepare the composite particles including metal hydroxide that is more modified by the flame retardant, it is desirable to use a metal hydroxide as a starting material with as large a specific surface area as possible and to mix the metal hydroxide with a relatively large specific surface area with a flame retardant to set the specific surface area of the composite particles in the above-mentioned range. The specific surface area of the composite particles tends to decrease when the amount of flame retardant added to the metal hydroxide is increased or the reaction time when combining the metal hydroxide and flame retardant is lengthened. Accordingly, the specific surface area of the composite particles can be adjusted by changing these conditions, and thus the specific surface area of the metal hydroxide as the starting material is not particularly limited, but the specific surface area of the metal hydroxide may be, for example, greater than or equal to about 100 $m^2/g$ and less than or equal to about 500 $m^2/g$.

For the composite particle according to the present embodiment, it is desirable that the content of Al (aluminium) element and P (phosphorus) element measured by inductively coupled plasma emission spectroscopy (ICP-AES) is within the following range.

The content of Al element in the composite particles may be greater than or equal to about 5 mass% and less than or equal to about 30 mass%, or greater than or equal to about 5 mass% and less than or equal to about 25 mass%.

The content of P element in the composite particles may be greater than or equal to about 5 mass% and less than or equal to about 30 mass%, or greater than or equal to about 7 mass% and less than or equal to about 28 mass%.

In addition, the content of the Al (aluminium) element and the P (phosphorus) element measured by ICP-AES in the composite particle can be adjusted depending on the type and content of the metal hydroxide and flame retardant used in the preparation of the composite particle.

In order to further improve the endothermic effect of the composite particles, the composite particles may be modified with functional groups such as $CH_3$ groups and $CH_2OH$ groups. A degree of modification by these functional groups may be evaluated by the following desorption amounts of various gases derived from these functional groups, in the same way as the degree of modification by functional groups including the phosphorus (P) element (e.g., phosphonic acid). It is desirable that the desorption amounts of various gases satisfy the following ranges. On the other hand, the desorption amounts of various gases can be adjusted depending on the type and content of the metal hydroxide and flame retardant used in preparing the composite particles.

The amount (referred to as MS3) of desorbed $CH_4$ gas measured by TDS-MS, which is the amount of $CH_4$ gas desorbed from the composite particle when the composite particle is heated from about 80 °C to about 1400 °C, may be 0, but may exceed 0 and less than or equal to about $1000 \times 10^{-6}$ mol/g, greater than or equal to about $10 \times 10^{-6}$ mol/g and less than or equal to about $700 \times 10^{-6}$ mol/g, or greater than or equal to about $30 \times 10^{-6}$ mol/g and less than or equal to about $500 \times 10^{-6}$ mol/g.

Similarly, the amount of released $CH_3OH$ (referred to as MS4) measured may be 0, but may exceed 0 and less than or equal to about $4000 \times 10^{-6}$ mol/g, greater than or equal to about $200 \times 10^{-6}$ mol/g and less than or equal to about $3000 \times 10^{-6}$ mol/g, or greater than or equal to about $500 \times 10^{-6}$ mol/g and less than or equal to about $3000 \times 10^{-6}$ mol/g.

When the composite particles are modified with a functional group including a phenyl group, it is easy to disperse the metal hydroxide particles in the solvent when preparing a slurry using a non-aqueous solvent such as N-methyl-2-pyrrolidone (NMP).

Therefore, the amount (referred to as MS5) of desorbed $C_6H_6$ from about 80 °C to about 1400 °C by TDS-MS of the metal hydroxide particles may be 0, but may be greater than 0 and less than or equal to about $4000 \times 10^{-6}$ mol/g,

greater than or equal to about $10 \times 10^{-6}$ mol/g and less than or equal to about $3000 \times 10^{-6}$ mol/g, or greater than or equal to about $100 \times 10^{-6}$ mol/g and less than or equal to about $3000 \times 10^{-6}$ mol/g.

The total content of modified molecules in the composite particles may be in the range of greater than or equal to about 10 mass% and less than or equal to about 99 mass%, greater than or equal to about 20 mass% and less than or equal to about 97 mass%, or greater than or equal to about 30 mass% and less than or equal to about 95 mass% based on 100 mass% of the total composite particles.

(3-2. Manufacturing Method of Positive Electrode)

The positive electrode 1 is produced as follows. First, a positive electrode slurry is formed by dispersing a mixture of a positive electrode active material, a conductive agent, and a positive electrode binder in a desired ratio in a solvent for a positive electrode slurry. Next, this positive electrode slurry is coated on the positive electrode current collector 11 and dried to form a positive electrode mixture layer 12. On the other hand, the coating method is not particularly limited. The coating method may include a knife coater method, a gravure coater method, a reverse roll coater, a slit die coater, and the like. Each of the following coating processes is also performed by the same method. Subsequently, the positive electrode material mixture layer 12 is pressed by a press to have a desired density.

The aforementioned composite particles and a binder are dispersed in a solvent to produce a flame retardant layer composite slurry. This slurry is then coated on the opposite side of the positive electrode collector 11 where the positive electrode composite layer 12 is formed, and dried to form a flame retardant layer 13. The binder and solvent may be the same as the positive electrode binder and the solvent for the positive electrode slurry. Thus, a positive electrode 1 is manufactured.

(3-3. Manufacturing Method of Negative Electrode)

The negative electrode 2 is also produced in the same way as the positive electrode 1. First, a negative electrode slurry is prepared by dispersing a mixture of materials constituting the negative electrode mixture layer 22 in a solvent for a negative electrode slurry. Next, a negative electrode mixture layer 22 is formed by coating the negative electrode slurry on the negative current collector 21 and drying the negative electrode mixture layer 22. Next, the negative electrode material mixture layer 22 is pressed by a press machine so as to have a desired density. Thus, a negative electrode 2 is manufactured.

(3-4. Manufacturing Method of Non-aqueous Electrolyte Rechargeable Battery)

Next, an electrode structure is manufactured by placing a separator 3 between the positive electrode 1 and the negative electrode 2. Then, the electrode structure may be processed into a desired shape (e.g., cylindrical shape, prismatic shape, laminated shape, button shape, etc.) and inserted into a container of the above shape. Subsequently, a non-aqueous electrolyte is inserted into the corresponding container to impregnate the electrolyte into each pore in the separator or a gap between the positive electrode 1 and negative electrode 2. Accordingly, a rechargeable lithium ion battery is manufactured.

<4. Effect by the Present Embodiment >

According to the non-aqueous electrolyte rechargeable battery 100 configured as described above, even in an environment where the internal temperature is likely to rise due to battery abnormalities such as internal short circuits, the increase in the internal temperature of the non-aqueous electrolyte rechargeable battery 100 may be sufficiently suppressed, electrical resistance of the non-aqueous electrolyte rechargeable battery 100 may be suppressed to a small level, and cycle characteristics may be improved.

<5. Another Embodiment >

The present disclosure is not limited to the aforementioned embodiments.

In the above-described embodiment, it is explained that the positive electrode mixture layer and the flame retardant layer are formed only on one surface of the positive electrode current collector. However, the positive electrode mixture layer may be formed on both surfaces of the positive electrode current collector, and then the flame retardant layers may be formed on each of these two positive electrode mixture layers, or the flame retardant layer may be formed only on one surface of the two positive electrode mixture layers formed on both surfaces of the positive electrode current collector.

In addition, the present invention is not limited to these embodiments but may be variously modified without deviating from the purpose.

[Examples]

Hereinafter, the present invention will be described in more detail according to specific examples. However, the following examples are only one example of the present invention, and the present invention is not limited to the following examples.

< Production of Composite Particles or Particle Mixture >

(Example 1)

As starting materials, 1.0 g of aluminium hydroxide ($D_{50}$: 1.2 $\mu$m, BET: 212 m$^2$/g, Manufacturer: Iwatani Chemical Industry Co., Ltd.) and 5.0 g of methylphosphinic acid were used, and these were dispersed in 50 cc of a mixed solution of ethanol and purified water (mixing volume ratio 1:1). This dispersion was heated at 70 °C and a stirring speed of 300 m/min for 24 hours, filtered with water and ethanol, and washed with water and ethanol, and the solid on the filter paper was vacuum dried to obtain Composite particles A.

(Example 2)

Composite particles B were obtained in the same manner as in Example 1, except that 1.0 g of activated alumina ($D_{50}$: 1.5 $\mu$m, BET: 312 m$^2$/g, Manufacturer: Zibo Yinghe Chemical Co.,Ltd.) and 5.0 g of methylphosphonic acid were used as starting materials.

(Example 3)

Composite particles C were obtained in the same manner as in Example 1, except that 1.0 g of pseudo-boehmite ($D_{50}$: 1.0 $\mu$m, BET: 391 m$^2$/g, Manufacturer: Zibo Linxi Chemical Co., Ltd.) and 5.0 g of diphenyl phosphate were used as starting materials.

(Example 4)

Composite particles D were obtained in the same manner as in Example 1, except that 1.0 g of kaolinite ($Al_2Si_2O_5(OH)_4$, $D_{50}$: 1 $\mu$m, BET: 120 m$^2$/g, Manufacturer: Hebei Jinshi New Materials Technology Co., Ltd.) and 5.0 g of phenyl phosphate were used as starting materials.

(Example 5)

Composite particles E were obtained in the same manner as in Example 1, except that 1.0 g of pseudo-boehmite ($D_{50}$: 1.0 $\mu$m, BET: 391 m$^2$/g, Manufacturer: Zibo Linxi Chemical Co., Ltd.) and 5.0 g of phenylphosphonic acid were used as starting materials.

(Example 6)

Composite particles F were obtained in the same manner as in Example 1, except that 1.0 g of pseudo-boehmite ($D_{50}$: 1.0 $\mu$m, BET: 391 m$^2$/g, Manufacturer: Zibo Linxi Chemical Co., Ltd.) and 1.0 g of diphenyl phosphate were used as starting materials.

(Example 7)

Composite particles G were obtained in the same manner as in Example 1, except that 1.0 g of pseudo-boehmite ($D_{50}$: 1.0 $\mu$m, BET: 391 m$^2$/g, Manufacturer: Zibo Linxi Chemical Co., Ltd.) and 5.0 g of phenyl phosphate were used as starting materials.

(Example 8)

Composite particles H were obtained in the same manner as in Example 1, except that 1.0 g of pseudo-boehmite ($D_{50}$: 1.0 $\mu$m, BET: 391 m$^2$/g, Manufacturer: Zibo Linxi Chemical Co., Ltd.) and 5.0 g of methylphosphinic acid were used as starting materials.

(Example 9)

Composite particles I were obtained in the same manner as in Example 1, except that 1.0 g of pseudo-boehmite ($D_{50}$: 1.0 $\mu$m, BET: 391 m$^2$/g, Manufacturer: Zibo Linxi Chemical Co., Ltd.) and 5.0 g of phosphoric acid were used as starting materials.

(Example 10)

Composite particles J were obtained in the same manner as in Example 1, except that 1.0 g of kaolinite ($Al_2Si_2O_5(OH)_4$, $D_{50}$: 1$\mu$m, BET: 120 m$^2$/g, Manufacturer: Hebei Jinshi New Materials Technology Co., Ltd.) and 5.0 g of phenylphosphonic acid were used as starting materials.

(Example 11)

Composite particles K were obtained in the same manner as in Example 1, except that 1.0 g of kaolinite ($Al_2Si_2O_5(OH)_4$, $D_{50}$: 1 $\mu$m, BET: 120 m$^2$/g, Manufacturer: Hebei Jinshi New Materials Technology Co., Ltd.) and 5.0 g of methylphosphonic acid were used as starting materials.

(Example 12)

Composite particles L were obtained in the same manner as in Example 1, except that 1.0 g of kaolinite ($Al_2Si_2O_5(OH)_4$, $D_{50}$: 1 $\mu$m, BET: 120 m$^2$/g, Manufacturer: Hebei Jinshi New Materials Technology Co., Ltd.) and 5.0 g of methylphosphinic acid were used as starting materials.

(Example 13)

Composite particles M were obtained in the same manner as in Example 1, except that 1.0 g of aluminium hydroxide ($D_{50}$: 1.2 $\mu$m, BET: 212 m$^2$/g, Manufacturer: Iwatani Chemical Industry Co., Ltd.) and 5.0 g of methylphosphonic acid were used as starting materials.

(Example 14)

Composite particles N were obtained in the same manner as in Example 1, except that 1.0 g of aluminium hydroxide ($D_{50}$: 1.2 $\mu$m, BET: 212 m$^2$/g, Manufacturer: Iwatani Chemical Industry Co., Ltd.) and 5.0 g of phenylphosphonic acid were used as starting materials.

(Example 15)

Composite particles O were obtained in the same manner as in Example 1, except that 1.0 g of activated alumina ($D_{50}$: 1.5 $\mu$m, BET: 312 m$^2$/g, Manufacturer: Zibo Yinghe Chemical Co., Ltd.) and 5.0 g of methylphosphinic acid were used as starting materials.

(Example 16)

Composite particles P were obtained in the same manner as in Example 1, except that 1.0 g of activated alumina ($D_{50}$: 1.5 $\mu$m, BET: 312 m$^2$/g, Manufacturer: Zibo Yinghe Chemical Co., Ltd.) and 5.0 g of phenylphosphonic acid were used as starting materials.

(Comparative Example 5)

1.0 g of aluminium hydroxide ($D_{50}$: 1.2 $\mu$m, BET: 20 m$^2$/g, Manufacturer: Iwatani Chemical Industry Co., Ltd.) and 1.0 g of phosphoric acid were mixed for 10 minutes using a V-type mixer manufactured by Dalton Co., Ltd. to obtain Particle mixture a.

(Comparative Example 6)

1.0 g of pseudo-boehmite ($D_{50}$: 1.0 $\mu$m, BET: 391 $m^2$/g, Manufacturer: Zibo Linxi Chemical Co., Ltd.) and 1.0 g of diphenyl phosphate were mixed for 10 minutes using a V-type mixer manufactured by Dalton Co., Ltd. to obtain Particle mixture b.

<Manufacture of Positive Electrode>

(Examples 1 to 16 and Comparative Examples 1 to 6)

The positive electrode was manufactured in the following procedure.

$LiCoO_2$, acetylene black, and polyvinylidene fluoride were dispersed and mixed in N-methyl-2-pyrrolidone solvent in a mass ratio of 97.7:1.0:1.3 as a dry powder (solid content) including no solvent, thereby preparing a positive electrode mixture slurry. Next, the slurry is coated on one surface or both surfaces of the aluminium current collector so that the mixture application amount (surface density) after drying is 20.0 mg/$cm^2$ on one surface, dried, and then pressed with a roll press machine so that the positive electrode mixture layer density is 4.15 g/cc to form a positive electrode mixture layer.

The composite particles, endothermic particles, particle mixtures, or radical scavengers listed in Table 1 (composite particles, endothermic particles, particle mixtures, or radical scavengers are collectively referred to as heat suppressing additives), and polyvinylidene fluoride as a binder are dispersed and mixed in a form of dry powders (solid content) including no solvent in N-methyl-2-pyrrolidone solvent to prepare flame retardant layer mixture slurries. The heat suppressing additive and the binder were mixed in a mass ratio of X:100-X (X is the mass ratio of the heat suppressing additive shown in Table 1, that is, the mass% in the flame retardant). This flame retardant layer mixture slurry was coated on the surface of the positive electrode mixture layer opposite to the positive electrode current collector to have the thickness shown in Table 1 to form a coating layer, and dried under the conditions of a drying temperature of 100 °C and a drying time of 600 seconds to form a flame retardant layer.

(Comparative Examples 7 to 10)

$LiCoO_2$, acetylene black, polyvinylidene fluoride, and the composite particles shown in Table 1 were mixed and dispersed with in a mass ratio of 97.0:1.0:1.3:0.7 as dry powder (solid content) including no solvent in a N-methyl-2-prolidone solvent to prepare a positive electrode mixture slurry. Next, the slurry is coated on one surface or both surfaces of the aluminium current collector so that the mixture coating amount (surface density) after drying is 20.0 mg/$cm^2$ on one surface, dried, and then pressed with a roll press machine so that the positive electrode mixture layer density is 4.15 g/cc to manufacture a positive electrode including only the positive electrode current collector and the positive electrode mixture layer.

< Manufacture of Negative Electrode>

(Examples 1 to 16 and Comparative Examples 1 to 10)

Artificial graphite, carboxymethyl cellulose sodium salt (CMC), and styrene-butadiene-based water dispersion were dissolved and dispersed in an aqueous solvent so that the mass ratio as dry powder (solid content) including no solvent is 97.5:1.0:1.5, to prepare a negative electrode mixture slurry. Next, the negative electrode mixture slurry was coated and dried on one surface or both surfaces of the copper foil, which is the negative electrode current collector, so that the mixture coating amount (surface density) after drying was 15.0 mg/$cm^2$, and then the pressed with a roll press machine to manufacture a negative electrode so that the negative electrode mixture layer density is 1.65 g/cc.

< Manufacture of Rechargeable Battery Cells>

(Examples 1 to 16 and Comparative Examples 1 to 10)

A plurality of the positive electrodes and a plurality of the negative electrode were stacked with a polypropylene porous separator between the positive and negative electrodes to have battery design capacity of 300 mAh, manufacturing an electrode stack. At this time, as the positive electrode and negative electrode placed inside the electrode stack, mixture layers formed on both surfaces of the current collector were used, and for the positive electrode or negative electrode disposed on the outermost layer, a mixture layer formed on only one surface was used. Specifically, a positive electrode with an electrode plate area of 8.5 $cm^2$ (both surfaces, 5 sheets) and a negative electrode with an electrode plate area of 10.0 cm$^2$ (4 sheets of both surfaces and 2 sheets of one surface) were manufactured. Subsequently, a rechargeable battery cell before the initial charge was manufactured by welding nickel and aluminium lead wires respectively to the negative and positive electrodes of the electrode stack, housing the electrode stack in an aluminium laminate film with the lead wires externally pulled out, injecting an electrolyte thereinto, and sealing the aluminium laminate film under a reduced pressure. The electrolyte was prepared by dissolving 1.3 M LiPF$_6$ and 1 mass% of vinylene carbonate in a mixed solvent of ethylene carbonate / dimethyl carbonate / fluoroethylene carbonate in a volume ratio of 15/80/5.

< Evaluation of Heat Suppression Additives>

The heat suppressing additives used in Examples and Comparative Examples were evaluated as follows.

(Elemental Analysis)

Measurements were made in accordance with JIS K0116:2014 using an inductively coupled plasma emission spectroscopic analyzer (ICP-AES, Agilent Technology Co., Ltd., Agilent 5110 VDV type), and the Al element and P element contained in the endothermic particles or radical scavenger of each Example and Comparative Example were quantitatively analyzed.

(Specific Surface Area)

The specific surface area (BET calculated based on the adsorption isotherm measured by adsorbing water vapor) of the inorganic particles or composite particles was measured using a gas adsorption amount measuring device (BELSORP manufactured by Microtrac Bell), according to JIS K6217-2.

(Mass of Desorbed Gas)

Thermal desorption gas mass spectrometry (TDS-MS) was conducted by using a thermal desorption gas mass spectrometer (TDS-1200, ESCO, Ltd.) to measure and analyze each desorbed amount of methane molecules, methanol molecules, benzene molecules, diphosphorus molecules, and water molecules, as follows.

In TDS, the negative active materials were set by using a sample stage made of quartz and a sample dish made of SiC. In addition, the temperature increase rate was 60 °C/min. The temperature increase was controlled by monitoring a temperature on the sample surface. Furthermore, a weight of the sample was 1 mg, which was corrected by an actual weight. A quadrupole mass spectrometer was used for a detection, and a voltage applied thereto was 1000 V. TDS was used to measure an amount ($\mu$mol/g) of each gas desorbed from the inorganic particles or composite particles during the temperature increase from 80 °C to 1400 °C. The mass number [M/z] used for analyzing the measurements was 15 for $CH_4$, 18 for $H_2O$, 31 for $CH_3OH$, 62 for $P_2$, and 78 for $C_6H_6$, wherein gases corresponding to the mass numbers were all each of the aforementioned substances. Herein, regarding the gas amount of $H_2O$, an integrated value only from 80 °C to 200 °C out of the entire temperature range was used to obtain the desorbed $H_2O$ amount (MS2).

(Evaluation of Particle Diameter)

The particle diameter of the composite particle, endothermic particle, or particle mixture was evaluated as $D_{50}$, 50% of the integrated value of the particle size distribution, and was evaluated as $D_{90}$, 90% of the integrated value of the particle size distribution based on the particle diameter volume in the particle size distribution obtained by laser diffraction/scattering method. $D_{50}$ and $D_{90}$ were measured using the following equipment and conditions.

Measuring device: Laser diffraction/scattering particle diameter distribution measuring device MT3300 (manufactured by Micro Track Bell)
Permeability: Permeable
Shape: Non-spherical
Circulation speed: 7
Measurement time: 30 seconds
Number of repetitions: 3
Refractive index:

a. Composite particles, endothermic particles, or particle mixtures: 1.65
b. Ethanol solvent: 1.36

[Evaluation of Rechargeable Battery Cells]

(Cycle Characteristics)

The rechargeable battery cells according to Examples 1 to 16 and Comparative Examples 1 to 10 were charged under a constant current to 4.3 V at 0.1 CA of design capacity and charged under a constant voltage to 0.05 CA still at 4.3 V in a 25 °C thermostat. Subsequently, the cells were discharged under a constant current to 3.0 V at 0.1 CA. In addition, the cells were measured with respect to initial discharge capacity after the 1st cycle through a constant current charge at 0.2 CA, a constant voltage charge at 0.05 CA, and a constant current discharge at 0.2 CA under conditions of a charge cut-off voltage of 4.3 V and a discharge cut-off voltage of 3.0 V in the 25 °C thermostat. The rechargeable battery cells were 100 cycles charged and discharged through a constant current charge at 0.5 CA, a constant voltage charge at 0.05 CA, and a constant current discharge 0.5 CA under conditions of a charge cut-off voltage of 4.3 V and a discharge cut-off voltage of 3.0 V at 45 °C to test a cycle-life. After the 100 cycles, discharge capacity at a constant current charge of 0.2 CA, a constant voltage charge of 0.05 CA, and a discharge at 0.2 CA of the cells was measured and was divided by the initial discharge capacity to obtain capacity retention after the 100 cycles.

(Heating Test)

The rechargeable battery cells according to Examples 1 to 16 and Comparative Examples 1 to 10 were charged under a constant current to 4.3 V at design capacity of 0.1 CA and charged under a constant voltage at 4.3 V to 0.05 CA in the 25 °C thermostat. Subsequently, the cells were discharged to 3.0 V at 0.1 CA under a constant current. In addition, in the 25 °C thermostat, after performing a constant current charge at 0.2 CA, a constant voltage charge at 0.05 CA, and a constant current discharge at 0.2 CA under conditions of a charge cut-off voltage of 4.3 V and a discharge cut-off voltage of 3.0 V as 1 cycle, the cells were charged again under a constant current/constant voltage- to 4.42 V, which were regarded as initial cells. These rechargeable battery cells were left for 1 hour in a thermostat heated to 165 °C, and a case where a voltage of a battery cell became 4.3 V or less was regarded as "abnormal occurrence", and an abnormal occurrence rate was evaluated in the 10 battery tests.

(Nail Penetration Test)

A nail penetration test was conducted by penetrating the aforementioned initial cells in the center with a nail having a diameter of 3 mm at 50 mm/s. A case where an external temperature of a battery cell reached 50 °C or higher 5 seconds after penetrated with the nail was regarded as "abnormal occurrence," and an abnormal occurrence rate was evaluated in the 10 battery tests.

(Overcharge Test)

A case where an external temperature of a battery cell reached 50 °C or higher after additionally charging the aforementioned initial cells under a constant current to 12 V at 3 CA and then, charging them under a constant voltage for 10 minutes after reaching 12 V was regarded as "abnormal occurrence," an abnormal occurrence rate was evaluated in the 10 battery tests.

(Evaluation of Cell Resistance ($\Omega$))

Measurements were made using the alternating current impedance (EIS) method at 25 °C in a fully charged initial cell. As measurement conditions, the frequency range was 100 kHz to 100 mHz, and the applied voltage was 10 mV.
Additionally, the VMP-3 Potentiostat manufactured by BioLogic was used as a measuring device for this EIS method. The size of the semicircular arc of the Nyquist plot obtained as a result of the measurement was taken as the cell resistance.

(Evaluation Results)

The types and physical properties of the heat suppressing additives used in the examples and comparative examples described above are shown in Table 1. In addition, the evaluation results for the rechargeable battery cells of Examples 1 to 16 and Comparative Examples 1 to 10 are summarized in Table 2.

(Table 1)

| | Placement location of flame retardant | Flame retardant | Thermal desorption gas mass | | | Particle diameter | | Specific surface area | Element content | | Mass ratio of flame retardant composite particles in the flame retardant layer (%) | Thickness of flame retardant layer ($\mu$m) |
|---|---|---|---|---|---|---|---|---|---|---|---|---|
| | | | MS1 ($\mu$mol/g) | MS2 ($\mu$mol/g) | Mass ratio of desorbed gases (-) | $D_{50}$ ($\mu$m) | $D_{90}$ ($\mu$m) | BET ($m^2$/g) | Al (%) | P (%) | | |
| Ex. 1 | Flame retardant on the surface of positive | Composite particles A | 1195 | 558 | 2.1 | 0.8 | 3.5 | 35 | 17 | 20 | 90 | 2 |
| Ex. 2 | | Composite particles B | 1598 | 845 | 1.9 | 0.9 | 3.8 | 94 | 11 | 26 | 95 | 3 |
| Ex. 3 | | Composite particles C | 585 | 725 | 0.8 | 0.6 | 3 | 69 | 8 | 9 | 92 | 2 |
| Ex. 4 | | Composite particles D | 908 | 754 | 1.2 | 1.2 | 4.5 | 61 | 6 | 15 | 90 | 3 |

| | Placement location of flame retardant | Flame retardant | Thermal desorption gas mass | | | Particle diameter | | Specific surface area | Element content | | Mass ratio of flame retardant composite particles in the flame retardant layer (%) | Thickness of flame retardant layer ($\mu$m) |
|---|---|---|---|---|---|---|---|---|---|---|---|---|
| | | | MS1 ($\mu$mol/g) | MS2 ($\mu$mol/g) | Mass ratio of desorbed gases (-) | $D_{50}$ ($\mu$m) | $D_{90}$ ($\mu$m) | BET ($m^2$/g) | Al (%) | P (%) | | |
| Ex. 5 | electrode plate | Composite particles E | 991 | 738 | 1.3 | 0.5 | 2.8 | 38 | 7 | 16 | 85 | 4 |
| Ex. 6 | | Composite particles F | 728 | 865 | 0.8 | 0.6 | 2.9 | 91 | 21 | 12 | 80 | 2 |
| Ex. 7 | | Composite particles G | 921 | 732 | 1.3 | 0.6 | 2.9 | 51 | 6 | 15 | 85 | 3 |
| Ex. 8 | | Composite particles H | 1192 | 632 | 1.9 | 0.5 | 2.8 | 35 | 17 | 20 | 95 | 2 |
| Ex. 9 | | Composite particles I | 1598 | 835 | 1.9 | 0.4 | 2.6 | 71 | 7 | 26 | 90 | 1 |
| Ex. 10 | | Composite particles J | 962 | 752 | 1.3 | 1.1 | 3.5 | 52 | 7 | 16 | 95 | 2 |
| Ex. 11 | | Composite particles K | 1621 | 831 | 2.0 | 1.3 | 3.6 | 76 | 11 | 26 | 90 | 3 |
| Ex. 12 | | Composite particles L | 1158 | 605 | 1.9 | 1.2 | 3.8 | 35 | 17 | 20 | 85 | 2 |
| Ex. 13 | | Composite particles M | 1542 | 801 | 1.9 | 0.9 | 3.4 | 71 | 11 | 26 | 98 | 3 |
| Ex. 14 | | Composite particles N | 983 | 712 | 1.4 | 0.8 | 3.6 | 49 | 7 | 16 | 97 | 2 |
| Ex. 15 | | Composite particles O | 1156 | 545 | 2.1 | 0.9 | 3.8 | 35 | 17 | 20 | 95 | 3 |
| Ex. 16 | | Composite particles P | 958 | 725 | 1.3 | 0.9 | 3.9 | 53 | 7 | 16 | 90 | 1 |

| | Placement location of flame retardant | Flame retardant | Thermal desorption gas mass | | | Particle diameter | | Specific surface area | Element content | | Mass ratio of flame retardant composite particles in the flame retardant layer (%) | Thickness of flame retardant layer (μm) |
|---|---|---|---|---|---|---|---|---|---|---|---|---|
| | | | MS1 (μmol/g) | MS2 (μmol/g) | Mass ratio of desorbed gases (-) | $D_{50}$ (μm) | $D_{90}$ (μm) | BET (m²/g) | Al (%) | P (%) | | |
| Comp. Ex. 1 | | | | | | | | | | | | |
| Comp. Ex. 2 | Flame retardant on the surface of positive electrode plate | Aluminium hydroxide particle | 0 | 63 | 0.0 | 1.2 | 4.8 | 212 | 32 | 0 | 95 | 2 |
| Comp. Ex. 3 | | Pseudo-boehmite particle | 0 | 1921 | 0.0 | 1.0 | 3.5 | 391 | 32 | 0 | 90 | 2 |
| Comp. Ex. 4 | | Diphenyl phosphate | 765 | 0 | - | - | - | - | 0 | 12 | 90 | 2 |
| Comp. Ex. 5 | | Particle mixture a | 493 | 35 | 14.1 | 1.2 | 4.8 | 105 | 16 | 16 | 95 | 2 |
| Comp. Ex. 6 | | Particle mixture b | 185 | 955 | 0.2 | 1.0 | 3.5 | 196 | 16 | 6 | 95 | 2 |
| Comp. Ex. 7 | Added in positive electrode mixture layer | Composite particles A | 1195 | 558 | 2.1 | 0.8 | 3.5 | 35 | 17 | 20 | - | 0 |
| Comp. Ex. 8 | | Composite particles B | 1598 | 845 | 1.9 | 0.9 | 3.8 | 94 | 11 | 26 | - | 0 |
| Comp. Ex. 9 | | Composite particles E | 991 | 738 | 1.3 | 0.5 | 2.8 | 38 | 7 | 16 | - | 0 |
| Comp. Ex. 10 | | Composite particles K | 1621 | 831 | 2.0 | 1.3 | 3.6 | 76 | 11 | 26 | - | 0 |

18

EP 4 404 309 A1

(Table 2)

| | Cell resistance ($\Omega$) | Discharge capacity retention rate after 100 cycles (%) | Heating test abnormal occurrence (%) | Nail penetration test abnormal occurrence (%) | Overcharge test abnormal occurrence (%) |
|---|---|---|---|---|---|
| Example 1 | 1.2 | 90.8 | 0 | 10 | 10 |
| Example 2 | 1.3 | 90.6 | 0 | 10 | 0 |
| Example 3 | 1.2 | 90.8 | 0 | 10 | 10 |
| Example 4 | 1.3 | 90.6 | 0 | 10 | 0 |
| Example 5 | 1.4 | 90.4 | 0 | 0 | 0 |
| Example 6 | 1.2 | 90.8 | 0 | 10 | 10 |
| Example 7 | 1.3 | 90.6 | 0 | 10 | 10 |
| Example 8 | 1.2 | 90.8 | 0 | 10 | 10 |
| Example 9 | 1.4 | 90.4 | 0 | 0 | 0 |
| Example 10 | 1.2 | 90.8 | 0 | 10 | 10 |
| Example 11 | 1.3 | 90.6 | 0 | 10 | 0 |
| Example 12 | 1.2 | 90.8 | 0 | 10 | 0 |
| Example 13 | 1.3 | 90.6 | 0 | 0 | 0 |
| Example 14 | 1.2 | 90.8 | 0 | 10 | 10 |
| Example 15 | 1.3 | 90.6 | 0 | 10 | 0 |
| Example 16 | 1.3 | 90.6 | 0 | 10 | 0 |
| Comparative Example 1 | 1.5 | 90.2 | 100 | 100 | 100 |
| Comparative Example 2 | 1.4 | 90.3 | 80 | 100 | 100 |
| Comparative Example 3 | 1.4 | 90.3 | 80 | 90 | 90 |
| Comparative Example 4 | 2.2 | 85.1 | 80 | 80 | 90 |
| Comparative Example 5 | 1.9 | 86.8 | 80 | 90 | 90 |
| Comparative Example 6 | 1.9 | 86.2 | 90 | 90 | 90 |
| Comparative Example 7 | 1.6 | 90.0 | 0 | 10 | 10 |
| Comparative Example 8 | 1.5 | 90.1 | 0 | 10 | 0 |
| Comparative Example 9 | 1.6 | 90.0 | 0 | 0 | 10 |
| Comparative Example 10 | 1.6 | 90.0 | 0 | 10 | 0 |

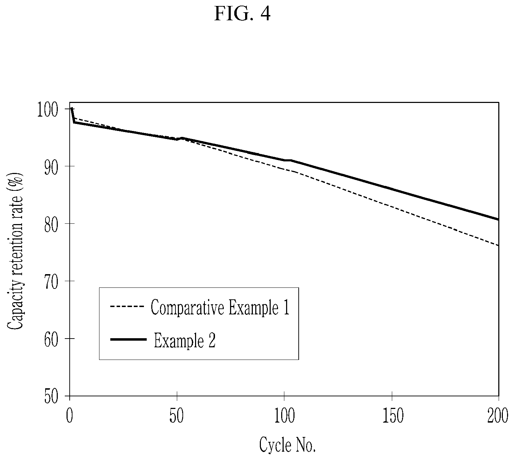

In addition, a graph of the discharge capacity retention rates for the rechargeable battery cells manufactured in Example 2 and Comparative Example 1 shown in Tables 1 and 2 is shown in FIG. 4.

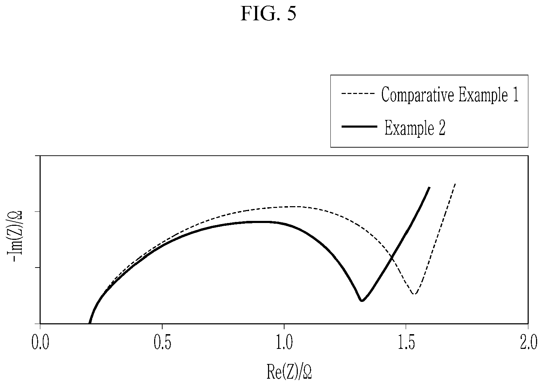

In addition, a graph of the cell resistance for the rechargeable battery cells manufactured in Example 2 and Comparative Example 1 is shown in FIG. 5.

<Confirmation of exothermic behavior under the coexistence of charged positive electrode and electrolyte>

The initial cells of the fully charged rechargeable battery cells manufactured in Example 2 and Comparative Example 1 shown in Table 1 and Table 2 were disassembled in a glove box, and the positive electrodes were washed with dimethyl carbonate solvent and dried, and the obtained positive electrodes were used as a "charged positive electrode."

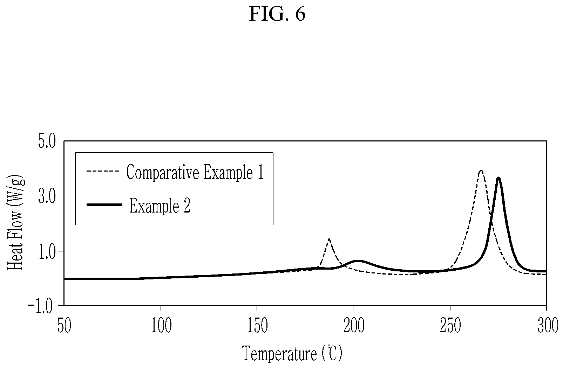

2.0 mg of the "charged positive electrode" and 1.0 mg of the same electrolyte used when manufacturing the rechargeable battery cell were placed in a special airtight container, caulked, and then using a differential scanning calorimetry device, DSC (manufactured by Hitachi High-Tech Science), the temperature was raised at a temperature increase rate of 5 K/min in accordance with the provisions of JIS K7121, and the exothermic behavior was evaluated. The results are shown in FIG. 6.

< Review on Examples and Comparative Examples >

From the results in Table 2, compared to Comparative Examples 2 to 6 including only either a metal hydroxide or a radical scavenger, as well as Comparative Example 1 including no heat suppressing additive, in Examples 1 to 16, even under conditions where the internal temperature of the battery is likely to rise, such as high temperature conditions, external impact from nailing, or overcharging, the abnormal occurrence rate caused by temperature rise inside the battery could be sufficiently suppressed. The fact that the peak around 180 °C identified in the graph showing the heating behavior of Comparative Example 1 in FIG. 6 disappears in the graph of Example 2 shows that the internal temperature rise of the battery is sufficiently suppressed in Example 2. In addition, compared to Comparative Examples 7 to 10, which include composite particles as a heat suppressing additive but include the composite particles in the positive electrode mixture layer, Examples 1 to 16 can suppress the internal resistance of the battery to be small, and surprisingly, the cell resistance can be reduced (about 8% reduced) and the cycle characteristics are improved compared to Comparative Example 1, which does not include a heat suppressing additive (FIGS. 4 and 5).

From the above experimental results, according to the present invention, the internal temperature of the battery is increased by making composite particles having both an endothermic effect and a radical trapping ability, and by incorporating this composite particles into a flame retardant layer on the positive electrode mixture layer, it is possible to sufficiently suppress the increase in the internal temperature of the battery and improve battery performance such as cell resistance and cycle characteristics.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**Claims**

1. A positive electrode for a non-aqueous electrolyte rechargeable battery, comprising

   a positive electrode current collector, a positive electrode mixture layer on the positive electrode current collector, and a flame retardant layer on a surface of the positive electrode mixture layer opposite to the current collector, wherein the flame retardant layer includes composite particles including a metal hydroxide and a flame retardant, an amount of desorbed $P_2$ (MS1) of the composite particles from about 80 °C to about 1400 °C as determined by thermal desorption gas mass spectrometry (TDS-MS) is greater than or equal to about $200 \times 10^{-6}$ mol/g and less than or equal to about $2500 \times 10^{-6}$ mol/g, and
   an amount of desorbed $H_2O$ (MS2) from about 80 °C to about 200 °C by TDS-MS is greater than or equal to about $50 \times 10^{-6}$ mol/g and less than or equal to about $1000 \times 10^{-6}$ mol/g.

2. The positive electrode of claim 1, wherein
   a ratio of the amounts of desorbed gases of the composite particles satisfies Formula (1):

$$0.5 \leq (MS1/MS2) \leq 10.0 \qquad (1).$$

3. The positive electrode of claim 1 or claim 2, wherein

an integrated value of 50% ($D_{50}$) of a volume-based particle size distribution of the composite particles is greater than or equal to about 0.05 $\mu$m and less than or equal to about 3 $\mu$m, and/or
an integrated value of 90% ($D_{90}$) of a volume-based particle size distribution of the composite particles is less than or equal to about 5 $\mu$m.

4.  The positive electrode of any one of claims 1 to 3, wherein
a specific surface area (BET) of the composite particles calculated by an adsorption isotherm measured by adsorbing nitrogen to the composite particles is greater than or equal to about 8 $m^2$/g and less than or equal to about 150 $m^2$/g.

5.  The positive electrode of any one of claims 1 to 4, wherein
the metal hydroxide is at least one selected from aluminium hydroxide, pseudo-boehmite, boehmite, alumina, and kaolinite, and/or a surface and interior of the metal hydroxide are modified with the flame retardant.

6.  The positive electrode of any one of claims 1 to 5, wherein
the flame retardant includes at least one of a phosphoric acid, a phosphoric acid ester, a phosphonic acid, or a phosphinic acid.

7.  The positive electrode of any one of claims 1 to 6, wherein
a content of an aluminium element is about 5 mass% to 30 mass% and/or a content of a phosphorus element is about 5 mass% to about 30 mass% as determined by inductively coupled plasma emission spectroscopy (ICP-AES).

8.  The positive electrode of any one of claims 1 to 7, wherein

the flame retardant layer includes the composite particles and a binder,
a content of the composite particles in the flame retardant layer is about 70 mass% to about 99 mass%, and
a content of the binder in the flame retardant layer is about 1 mass% to about 30 mass%.

9.  The positive electrode of any one of claims 1 to 8, wherein
the flame retardant layer has a thickness of about 0.1 $\mu$m to about 5 $\mu$m.

10. The positive electrode of any one of claims 1 to 9, wherein the metal hydroxide has a $D_{50}$ value greater than or equal to about 10 nm and less than or equal to about 10 $\mu$m.

11. The positive electrode of any one of claims 1 to 10, wherein an amount of the metal hydroxide is greater than or equal to about 1 mass% and less than or equal to about 50 mass%, based on a total weight of the composite particles.

12. The positive electrode of any one of claims 1 to 11, wherein an amount of the flame retardant is greater than or equal to about 0.1 mass% and less than or equal to about 90 mass%, based on a total weight of the composite particles.

13. A non-aqueous electrolyte rechargeable battery comprising

a positive electrode,
a negative electrode,
a separator, and
a non-aqueous electrolyte solution,
wherein the positive electrode is a positive electrode for a non-aqueous electrolyte rechargeable battery of any one of claims 1 to 12.

14. The non-aqueous electrolyte rechargeable battery of claim 13, wherein an amount of the composite particles is greater than or equal to about 0.01 mass% and less than or equal to about 5.0 mass%, based on a total weight of the non-aqueous electrolyte rechargeable battery.

FIG. 1

FIG. 2

Composite particles

Binder

13

1

12

11

FIG. 3

Composite particles

FIG. 4

FIG. 5

FIG. 6

Europäisches
Patentamt

European
Patent Office

Office européen
des brevets

**EUROPEAN SEARCH REPORT**

Application Number

EP 24 15 2584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/113855 A1 (PANASONIC IP MAN CO LTD [JP]) 2 June 2022 (2022-06-02) * paragraphs [0013], [0014], [0031], [0040] - [0042], [0044]; figures 1, 3 * | 1-6,9,12 | INV. H01M4/62 H01M10/42 |
| X,P | & EP 4 254 542 A1 (PANASONIC IP MAN CO LTD [JP]) 4 October 2023 (2023-10-04) * paragraphs [0013], [0014], [0031], [0040] - [0042], [0044]; figures 1, 3 * | 1-6,9,12 | ADD. H01M4/13 H01M10/0525 H01M4/02 |
| X,P | EP 4 254 546 A1 (SAMSUNG SDI CO LTD [KR]) 4 October 2023 (2023-10-04) * paragraphs [0001], [0055], [0073], [0074], [0105], [0108] - [0117], [0119]; table 1 * | 1-14 | |
| A | EP 3 761 419 A1 (LG CHEMICAL LTD [KR]) 6 January 2021 (2021-01-06) * the whole document * | 1-14 | |

TECHNICAL FIELDS
SEARCHED      (IPC)

H01M

The present search report has been drawn up for all claims

| Place of search | Date of completion of the search | Examiner |
|---|---|---|
| Munich | 17 June 2024 | Lavorenti, Marek |

EPO FORM 1503 03.82 (P04C01)

## ANNEX TO THE EUROPEAN SEARCH REPORT
## ON EUROPEAN PATENT APPLICATION NO.

EP 24 15 2584

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2024

| Patent document cited in search report | | Publication date | Patent family member(s) | | Publication date |
|---|---|---|---|---|---|
| WO 2022113855 | A1 | 02-06-2022 | EP | 4254542 A1 | 04-10-2023 |
| | | | JP WO2022113855 A1 | | 02-06-2022 |
| | | | US | 2024006718 A1 | 04-01-2024 |
| | | | WO | 2022113855 A1 | 02-06-2022 |
| EP 4254546 | A1 | 04-10-2023 | EP | 4254546 A1 | 04-10-2023 |
| | | | US | 2023352659 A1 | 02-11-2023 |
| EP 3761419 | A1 | 06-01-2021 | CN | 111886726 A | 03-11-2020 |
| | | | EP | 3761419 A1 | 06-01-2021 |
| | | | JP | 7258398 B2 | 17-04-2023 |
| | | | JP | 2021526301 A | 30-09-2021 |
| | | | KR | 20200090496 A | 29-07-2020 |
| | | | US | 2020411865 A1 | 31-12-2020 |
| | | | WO | 2020153604 A1 | 30-07-2020 |

EPO FORM P0459

For more details about this annex : see Official Journal of the European Patent Office, No. 12/82

**EP 4 404 309 A1**

REFERENCES CITED IN THE DESCRIPTION

**Patent documents cited in the description**

- JP 2013054969 A
- JP H1186844 B